# FASCICULE DE BREVET EUROPEEN

(11) **EP 2 392 508 B1**
(45) Date de publication et mention de la délivrance du brevet: **10.10.2018**
(21) Numéro de dépôt: 11168538.4
(22) Date de dépôt: 01.06.2011
(51) Int. Cl.: B64B 1/46, B64D 17/02, B64D 17/72

(54) **Procédé et dispositif d'ouverture d'une paroi gonflée**
Verfahren und Vorrichtung zum Öffnen einer aufgeblasenen Wandung
Method and device for opening an inflated wall

(30) Priorité: 03.06.2010 FR 1002355
(43) Date de publication de la demande: 07.12.2011
(73) Titulaire: Centre National d'Etudes Spatiales (C.N.E.S.), 75001 Paris (FR)
(72) Inventeur: Huens, Thomas, 31400 TOULOUSE (FR)
(74) Mandataire: Gaillarde, Frédéric F. Ch.

(56) Documents cités:
- EP-A2- 1 207 102
- WO-A2-2004/074001
- CN-Y- 200 954 877
- CN-Y- 201 111 836
- JP-A- 3 262 797
- JP-A- 10 157 697
- US-A- 2 756 948
- US-A- 4 281 571
- ScorethefilmBLOG: "The Black Pirate", , 18 October 1926 (1926-10-18), XP054977844, Retrieved from the Internet: URL:https://www.youtube.com/watch?v=wwa257 8IxkM [retrieved on 2017-10-31]

## Description

L'invention concerne un procédé et un dispositif permettant de dégonfler brutalement une paroi gonflée, notamment l'enveloppe d'un ballon d'aérostat, en la découpant.

Les parois gonflées se rencontrent dans de multiples applications, dans de nombreux domaines ; notamment, les enveloppes gonflées fermées ou semi-fermées. Elles ont l'avantage d'être faciles à transporter du fait de leur légèreté et du faible volume occupé à l'état dégonflé. Elles sont notamment utilisées dans le cadre d'engins plus légers que l'air (aérostats), sous-marins ou encore spatiaux. Souvent l'enveloppe gonflée, que ce soit un ballon, une structure gonflée ou une voile, est inhabitée et difficile d'accès. Il existe donc un besoin pour un procédé et un dispositif simples qui permettent de dégonfler rapidement et à distance une telle paroi gonflée.

Dans le cas d'aérostats atmosphériques et/ou stratosphériques, comportant un ou plusieurs ballons et servant entre autres à des missions de mesures scientifiques, le dégonflage est une étape cruciale soumise à des contraintes sévères. Les techniques connues de dégonflage (par exemple de US 2756948 qui est considéré comme l'art antérieur le plus proche, de CN 200954877 ou encore JP 10 157697) de ballon d'aérostats ne sont pas assez fiables pour permettre une prévision précise du site de retombée de l'enveloppe du(des) ballon(s). En effet, les techniques connues se contentent souvent d'une ouverture réduite de la paroi gonflée et il arrive parfois que le mauvais dégonflage d'un ballon ait pour conséquence un vol prolongé de l'aérostat, ce qui présente trois facteurs de risques. Le premier risque vient de ce qu'un vol prolongé de l'aérostat agrandit la zone de retombée probable de celui-ci. Cela peut avoir pour conséquence la perte de l'aérostat, et donc des instruments coûteux qu'il contient. Cela peut aussi représenter une pollution dans le cas où l'aérostat est perdu dans une zone naturelle difficile d'accès (mer, océan, forêt, etc.). Le deuxième facteur tient en ce qu'un aérostat à la dérive dans les courants atmosphériques représente un risque pour le trafic aérien qui est de plus en plus dense. Le troisième facteur est géopolitique et est lié à l'entrée involontaire dans un espace aérien étranger.

En outre, d'autres solutions à base d'explosifs, comme décrit par JP 10 157697 présentent de nombreux inconvénients parmi lesquels : un poids accru, un risque de manipulation, des risques géopolitiques accrus en cas de retombée d'un ballon chargé d'explosif dans un pays voisin, et un risque environnemental car l'explosion peut former de nombreux débris de paroi gonflée, ...

La présente invention vise donc de manière générale à résoudre le problème du dégonflage rapide mais contrôlé d'une paroi gonflée.

L'invention vise plus particulièrement à proposer un procédé et un dispositif permettant de dégonfler rapidement, de façon contrôlée et fiable une paroi gonflée, et notamment une paroi gonflée réalisant l'enveloppe d'un ballon d'aérostat.

L'invention vise en particulier, dans ce cadre, à réduire les dimensions de la zone de retombée probable d'un aérostat.

L'invention vise aussi à proposer un mode d'ouverture d'une paroi gonflée ne provoquant pas ou peu de débris libres issus de la paroi gonflée.

L'invention vise également à fournir un procédé simple et économique pour la mise en oeuvre d'un tel dégonflage.

L'invention vise encore à proposer une solution à ce problème aussi bien dans le cas d'une paroi gonflée atmosphérique ou stratosphérique que d'une paroi gonflée au sol, sous-marine ou spatiale.

L'invention vise notamment à proposer une solution de dégonflage pouvant être appliquée à toute paroi gonflée d'accès difficile.

L'invention vise aussi à fournir un procédé simple de dégonflage d'une paroi gonflée ne menant pas à une dispersion de la paroi gonflée en plusieurs morceaux.

Pour ce faire l'invention concerne un procédé selon la revendication 1.

L'invention est applicable à toute paroi gonflée pouvant être définie comme une paroi mince et souple, maintenue en position par une pression.

Un dispositif comportant une paroi gonflée peut être de multiples natures, par exemple : ballon d'aérostat, ballon sous-marin, voile, voile solaire, structure gonflée, structure pressurisée, etc.

Un organe de coupe est un organe apte à couper au moins en partie, dans son épaisseur, la paroi gonflée. La profondeur de coupe dans ladite paroi gonflée par un tel organe doit être totale ou suffisante pour que ladite paroi s'ouvre ensuite rapidement par rupture ductile et/ou fragile du fait de la tension de la paroi due à son gonflage.

Un organe de coupe selon l'invention peut être de multiples natures, par exemple une lame, un fil, une pointe, un laser, etc.

C'est le déplacement de l'organe de coupe sur la paroi gonflée qui permet de découper cette dernière. Ainsi, le front de coupe de la paroi gonflée se déplace à la surface de la paroi gonflée.

La progression de l'organe de coupe le long de la paroi gonflée coupe la paroi gonflée selon une ligne de coupe sensiblement déterminée.

L'invention s'étend à tous types de parois gonflées et à tous types d'organes de coupe. De la même manière, l'invention s'applique quel que soit le matériau dans lequel la paroi gonflée est réalisée : métallique, synthétique (plastique notamment), d'origine végétale (papier par exemple), composite, une combinaison de ces matériaux, ou autre.

Le matériau et les dimensions de l'organe de coupe sont choisis en fonction des caractéristiques de la paroi gonflée (matériau, épaisseur, différence de pression entre ses deux faces, etc...

Avantageusement et selon l'invention, on utilise au moins un organe de coupe filiforme, dit drisse de coupe, et on exerce une traction adaptée sur la drisse de coupe pour que la drisse de coupe traverse l'épaisseur de la paroi gonflée et découpe progressivement la paroi gonflée en formant ladite ligne de coupe.

Un organe de coupe filiforme selon l'invention peut être réalisé de différentes manières. On peut par exemple utiliser une corde tressée de fils ou non tressée (en un seul bloc, par exemple extrudée), ou encore une bande, ou autre.

Une drisse de coupe selon l'invention peut être faite de tous types de matériaux, notamment métallique (câble), végétal (par exemple une corde de chanvre), synthétique (plastique, Kevlar® par exemple), composite, une combinaison de ces matériaux, ou autre.

Avantageusement et selon l'invention, chaque drisse de coupe est adaptée -notamment en ce qui concerne le choix de son (ses) matériau(x) constitutif(s) et la manière dont elle est réalisée- de telle sorte qu'elle soit apte à couper la paroi gonflée.

Avantageusement et selon l'invention, ladite drisse de coupe :
- s'étend initialement sur une portion d'une face de la paroi gonflée,
- est initialement fixée en au moins un point, dit point de fixation, de la paroi gonflée,
et ladite traction :
- est appliquée en au moins un point de la drisse de coupe différent d'au moins un point de fixation, et par l'intermédiaire d'au moins un organe filiforme, dit drisse de commande,
- et est orientée, de façon à faire traverser l'épaisseur de la paroi gonflée à la drisse de coupe.

Ainsi, dans un procédé d'ouverture selon l'invention, au moins une portion de la drisse de coupe est déplacée, de sorte à former un front de coupe la paroi gonflée qui se déplace le long d'une ligne de coupe à la surface de la paroi gonflée pour l'ouvrir progressivement.

En effet, selon un mode de réalisation possible de l'invention, une drisse de coupe est fixée par l'une de ses extrémités de la paroi gonflée, et la traction est exercée sur sa seconde extrémité. Différentes autres variantes sont envisageables dans lesquelles une drisse de coupe est fixée en plusieurs points à la paroi gonflée, ou en un point différent de son extrémité, et dans lesquelles une traction est exercée en un point différent de l'une des extrémités de la drisse de coupe, ou encore en plusieurs points de cette dernière.

Par ailleurs, selon l'invention, il est parfois possible de se passer d'un point de fixation, à condition d'exercer une traction en au moins deux points de la drisse de coupe, l'une des tractions faisant office pour l'autre de point de fixation.

Par ailleurs, selon l'invention, chaque drisse de coupe est disposée sur une paroi gonflée de manière à ne pas risquer d'endommager cette dernière de manière intempestive pendant l'utilisation de la paroi gonflée à l'état gonflé. Cette nécessité implique notamment que la(les) drisse(s) de coupe soi(en)t capable(s) de s'adapter à des variations de forme et notamment de volume, ou à des mouvements et notamment des vibrations de la paroi gonflée. En particulier, dans un mode de réalisation avantageux selon l'invention chaque drisse de coupe a une longueur de 5% à 10% supérieure à une longueur, dite longueur de découpe, prédéterminée de découpe de la paroi gonflée nécessaire à son dégonflage rapide. Cette longueur est dépendante de nombreux facteurs en fonction de la nature et des dimensions de la paroi gonflée, et du milieu dans lequel elle évolue, par exemple : le volume enfermé par la paroi gonflée, la différence de pression et/ou de densité entre l'intérieur et l'extérieur de la paroi gonflée, le temps de dégonflage de la paroi gonflée souhaité par l'utilisateur.

Afin de maintenir une drisse de coupe sur la paroi gonflée, de nombreuses variantes de réalisation sont envisageables. Par exemple, on peut thermosouder une drisse de coupe sur toute sa longueur ou à intervalles réguliers sur la paroi gonflée. L'une de ces zones de thermosoudure, ou un ensemble de zones de thermosoudure peuvent faire office de point(s) de fixation.

La(les) drisse(s) de commande doi(ven)t aussi être disposée(s) de telle manière que des variations de forme, et notamment de volume, ou des mouvements et notamment des vibrations de la paroi gonflée n'entraînent pas de coupure intempestive de cette dernière. En particulier, dans un mode de réalisation avantageux selon l'invention, chaque drisse de commande a une longueur de 50% à 80% supérieure - avantageusement de 65% à 75% supérieure - à la longueur, dite longueur de commande, minimale nécessaire pour relier le point d'attache de ladite drisse de commande à une drisse de coupe au point d'attache de ladite drisse de commande à un dispositif de traction dont la fonction est d'exercer ladite traction sur au moins une drisse de coupe via ladite drisse de commande.

En particulier, la longueur de chaque drisse de commande est au moins 5% à 15% supérieure - en particulier 10% supérieure - à la longueur d'une ligne de plus court chemin le long de la paroi gonflée entre le point d'attache de ladite drisse de commande à une drisse de coupe et le point d'attache de ladite drisse de commande à un dispositif de traction dont la fonction est d'exercer ladite traction sur au moins une drisse de coupe via ladite drisse de commande.

Chaque drisse de commande peut être reliée à une ou plusieurs drisse(s) de coupe. De même, chaque drisse de coupe peut être reliée à une ou plusieurs drisse(s) de commande.

Comme pour la(les) drisse(s) de coupe, une telle drisse de commande peut être réalisée dans tous types de matériau : métallique (câble), végétal (par exemple une corde de chanvre), synthétique (plastique, Kevlar® par exemple), biologique ou animale (soie, fil d'araignée par exemple) ou encore une combinaison de ces matériaux.

Chaque drisse de commande doit être réalisée dans un matériau et selon une modalité telle qu'elle soit apte à transmettre à la drisse de coupe un effort minimum de traction suffisant pour la découpe de la paroi gonflée. Notamment, la liaison entre une drisse de commande et une drisse de coupe doit être telle que la drisse de coupe, généralement plus rigide, ou en tous cas plus coupante que la drisse de commande, ne coupe pas cette dernière lorsque l'effort de traction est communiqué par la drisse de commande à la drisse de coupe.

Pour ce faire, différentes variantes de réalisation sont envisageables. Par exemple, dans une variante possible de l'invention, la liaison mécanique entre la drisse de commande et la drisse de coupe peut notamment être réalisée grâce à une boucle sur l'une des extrémités de chacune des deux drisses à relier. Cette boucle peut être renforcée par un matériau résistant à l'effet de coupure de la drisse de coupe lorsque l'effort de traction est appliqué, notamment en métal.

Par ailleurs, une traction exercée sur une drisse de coupe par l'intermédiaire d'une drisse de commande doit être telle que, au point d'attache de la drisse de commande à la drisse de coupe, l'effort de traction doit s'exercer sur la drisse de coupe dans une direction et un sens qui l'entraîne à traverser progressivement la paroi gonflée. Ainsi si, par exemple, une drisse de coupe est disposée sur l'extérieur de la paroi gonflée, la force de traction devra avoir pour effet de tirer ladite drisse de coupe vers l'intérieur de cette paroi gonflée.

S'il y a des organes de changement de direction d'efforts, tels que des poulies par exemple, sur le chemin de la drisse de commande et/ou de coupe, la direction de la traction au point auquel la drisse de coupe traverse la paroi gonflée doit être telle que décrite ci-dessus.

Avantageusement, la traction exercée sur ce point de la drisse de coupe est orientée vers le demi-espace défini par un plan tangent à la paroi gonflée en ce point complémentaire du demi-espace dans lequel la drisse de coupe se trouve initialement, la traction ayant tendance à faire traverser la paroi gonflée à la drisse de coupe.

Avantageusement, la traction est même orientée, dans ce demi-espace, dans un sens tel qu'elle a tendance à plier la drisse de coupe en deux au point auquel elle traverse la paroi gonflée.

De plus, la drisse de coupe étant fixée en un point différent du point auquel est exercée la traction, la traction doit être d'intensité suffisante pour que la drisse de coupe traverse progressivement la paroi gonflée depuis le point où lui est appliquée la traction en direction de son point d'attache à la paroi gonflée, de sorte à former un front de coupe se déplaçant à la surface de la paroi gonflée. Cette traversée de la paroi gonflée, du point où la traction s'applique vers le point d'attache de la drisse de coupe détermine la ligne de coupe de la paroi gonflée.

En particulier, une telle traction doit être capable de briser des liens de maintien de la drisse de coupe sur la paroi gonflée, tels que des zones de thermosoudure de la drisse de coupe à la paroi gonflée par exemple, afin de ne pas interrompre la découpe de la paroi gonflée.

Avantageusement et selon l'invention,
- la paroi gonflée est une enveloppe gonflée d'un ballon d'aérostat, ledit aérostat comprenant au moins une masse, dite charge utile, suspendue, en vol, à au moins un ballon de l'aérostat grâce à un dispositif de suspension,
- pour découper ladite paroi gonflée, on relie au moins une charge utile à au moins une drisse de commande reliée à au moins une drisse de coupe, et on inactive le dispositif de suspension de cette charge utile de sorte qu'elle se trouve suspendue à la drisse de commande et exerce sur cette dernière une traction sous l'effet de son poids.

Un aérostat est un appareil en sustentation dans une atmosphère grâce à l'emploi d'un ou plusieurs gaz plus léger(s) que cette atmosphère de par leur nature ou de par leurs conditions physiques (température par exemple). Un aérostat comporte notamment au moins un ballon formé par une enveloppe gonflée présentant une paroi gonflée fermée ou semi-fermée (c'est-à-dire comportant au moins une ouverture de dimension très inférieure à sa surface totale).

Une charge utile est une masse ajoutée à l'aérostat qui n'est pas directement nécessaire à la sustentation dans une atmosphère de ce dernier. Une telle charge utile remplit des fonctions propres à une mission relative à chaque vol d'aérostat. Par exemple, une charge utile peut être constituée d'un ou plusieurs appareils de mesure scientifique.

Utiliser une charge utile de l'aérostat pour tirer sur au moins une drisse de coupe a pour avantage de ne pas nécessiter de dispositif supplémentaire uniquement dédié à exercer cette traction. Ainsi, le dispositif associé à un tel procédé est simplifié, moins coûteux, et n'ajoute pas ou peu de masse à la charge utile.

Néanmoins, d'autres variantes sont possibles. Par exemple, rien n'empêche d'utiliser, pour une paroi gonflée quelconque, un dispositif de traction tel qu'un moteur.

Selon l'invention, différentes variantes de réalisation d'un dispositif de suspension sont envisageable.

Un dispositif de suspension selon l'invention peut être réalisé grâce à une ou plusieurs suspentes. Ces suspentes peuvent être de différentes natures, souple ou rigide, et réalisées dans tous types de matériaux. D'autres dispositifs de suspension sont envisageables, Par exemple, rien n'empêche d'envisager une suspension magnétique.

Pendant le vol utile de l'aérostat, c'est-à-dire avant la mise en oeuvre du procédée de dégonflage, toute charge utile est suspendue à au moins un ballon de l'aérostat grâce au dispositif de suspension. Le dispositif de suspension est réputé actif pendant le vol utile, c'est-à-dire tant qu'il remplit sa fonction de suspension de la(des) charge(s) utile(s) à au moins un ballon d'aérostat. Il est réputé inactif lorsqu'il ne remplit plus cette fonction de suspension.

Pendant le dégonflage, c'est-à-dire après la fin du vol utile, au moins une charge utile n'est reliée au reste de l'aérostat que par une ou plusieurs drisse(s) de commande sur laquelle(lesquelles) elle exerce une traction du fait de son poids. Pour cela, le dispositif de suspension de cette charge utile est au moins pour partie inactivé en fin de vol utile.

Avantageusement, selon un mode de réalisation de l'invention, un premier dispositif de rupture est utilisé pour inactiver le dispositif de suspension.

Le dispositif de rupture utilisé dépend de la nature du dispositif de suspension et surtout de la manière de l'activer et de l'inactiver. En effet, un dispositif de suspension selon l'invention peut comporter un organe de verrouillage (par exemple, un verrou mécanique, des aimants commandés, certains types de noeuds, etc...). Un dispositif de suspension peut aussi ne pas comporter d'organe de verrouillage.

Si le dispositif de suspension dispose d'un système de verrouillage, il suffira de prévoir un dispositif de rupture qui déverrouille l'organe de verrouillage. En revanche, si le dispositif de suspension ne dispose pas d'un système de verrouillage entre la charge utile et son(ses) point(s) d'attache à l'aérostat, il sera nécessaire d'utiliser un dispositif de rupture qui rompe au moins en partie le dispositif de suspension.

Dans cette étape, le déverrouillage (respectivement la rupture) d'au moins une partie du dispositif de suspension c'est-à-dire d'au moins une suspente doit être suffisant pour que la charge utile exerce une traction sur au moins une drisse de coupe par l'intermédiaire d'une drisse de commande.

En particulier, la traction de la charge utile est d'autant plus efficace qu'elle n'est plus suspendue du tout au reste de l'aérostat. Pour ce faire, une partie suffisante du dispositif de suspension doit être inactivée pour que le reste du dispositif de suspension soit inactivé par rupture ou déverrouillage par le poids de la charge utile.

Le mode de réalisation le plus fiable consiste encore à inactiver intégralement (par rupture ou déverrouillage) le dispositif de suspension.

Plusieurs variantes peuvent être envisagées pour la réalisation de ce premier dispositif de rupture (mécanique, électronique, pyrotechniques, etc.). Néanmoins, dans un mode de réalisation avantageux selon l'invention, un dispositif de rupture, notamment de type pyrotechnique, est adjoint à des suspentes ne présentant pas d'organe de verrouillage d'une charge utile. Ce premier dispositif de rupture peut être programmé pour être activé en fonction de critères prédéterminés.

Par exemple un tel critère peut être un délai écoulé depuis le décollage de l'aérostat. D'autres critères peuvent être utilisés pour le déclenchement du dispositif de rupture tel qu'un signal télécommandé, une ou plusieurs conditions météorologiques, une pression, une position, un signal émis par les instruments embarqués à bord du ballon d'aérostat ou à bord de la charge utile, ou autres.

A partir du moment où le dispositif de suspension est inactivé, la charge utile tire une des drisse(s) de commande qui communique(nt) au moins une partie du poids de la charge utile à la/les drisse(s) de coupe à laquelle (auxquelles) elle(s) est (sont) reliée(s).

Selon un mode de réalisation de l'invention, lorsque les suspentes sont intégralement inactivées et qu'une charge utile n'est plus reliée au reste de l'aérostat que par une des drisses de commande, la (les) drisse(s) de commande est (sont) aussi inactivée(s) après la découpe de la paroi gonflée afin de séparer la charge utile de l'enveloppe dégonflée. Tout comme un dispositif de suspension, une drisse de commande peut présenter ou non un organe de verrouillage aux fins de l'activer ou de l'inactiver. Une drisse de commande est réputée activée tant qu'elle est apte à transmettre une traction. Généralement, une drisse de commande est réputée inactivée lorsqu'elle présente une division en deux parties distinctes.

Un second dispositif de rupture est prévu à cet effet et peut être programmé en fonction de critères prédéterminés. Les critères prédéterminés peuvent être par exemple un taux de déchirure et/ou de dégonflage de la paroi gonflée, ou encore un signal télécommandé, une ou plusieurs conditions météorologiques, une pression, une position, un signal émis par les instruments de la paroi gonflée, ou autres. Notamment le(les) critère(s) peu(ven)t être un délai écoulé depuis le décollage de la paroi gonflée et/ou depuis la rupture des suspentes.

Dans ce dernier cas, de nombreux moyens peuvent être envisagés tels que des dispositifs pyrotechniques à effet retardé, des dispositifs de minuterie électronique, etc... De même, de manière générale, plusieurs types de solutions techniques peuvent être envisagée pour réaliser ce second dispositif de rupture (pyrotechnique, mécanique, magnétique, etc.).

L'invention s'étend à un dispositif selon la revendication 5.

Un organe de coupe selon l'invention peut se présenter sous plusieurs formes. Il peut notamment faire partie des organes de coupe présentant une lame ou des organes de coupe par fil, de dimensions adaptée à ladite paroi gonflée.

Un organe de coupe selon l'invention est apte à découper au moins en partie l'épaisseur de la paroi gonflée maintenue en position par une pression de fluide. C'est-à-dire qu'un organe de coupe selon l'invention est apte à couper au moins suffisamment profondément ladite paroi gonflée pour que celle-ci s'ouvre rapidement par rupture ductile ou fragile de par sa tension interne due au gonflage. Avantageusement un organe de coupe selon l'invention est apte à couper une telle paroi gonflée sur toute son épaisseur.

En particulier, selon un mode de réalisation avantageux, un dispositif de dégonflage selon l'invention comprend au moins un organe de coupe filiforme, dit drisse de coupe, apte à être tiré par une traction adaptée pour que, en se déplaçant sur la paroi gonflée, la drisse de coupe traverse l'épaisseur de la paroi gonflée et découpe progressivement la paroi gonflée en formant ladite ligne de coupe.

Par ailleurs, avantageusement et selon l'invention, ladite drisse de coupe :
- s'étend initialement sur une portion d'une face de la paroi gonflée,
- est initialement fixée en au moins un point, dit point de fixation, de la paroi gonflée,
- est apte à être tirée en au moins un point, différent d'au moins un point de fixation,
- est attachée à au moins un organe filiforme, dite drisse de commande, laquelle est :
- apte à communiquer une traction à ladite drisse de coupe,
- disposée de telle manière à ce que la traction qu'elle communique à la drisse de coupe soit orientée, de façon à lui faire traverser l'épaisseur de la paroi gonflée.

Chaque drisse de coupe est disposée sur la paroi gonflée de telle manière à ne pas endommager la paroi gonflée pendant l'utilisation de la paroi gonflée. Notamment, elle(s) peu(ven)t présenter une élasticité suffisante pour compenser les déformations et les vibrations ou les mouvements de la paroi gonflée pendant son utilisation. À défaut ou en complément, chaque drisse de coupe peut présenter une longueur supérieure à la longueur minimale requise pour compenser les déformations, vibrations et/ou mouvements de la paroi gonflée. D'autres moyens, passifs ou actifs peuvent être prévus à cet effet.

Chaque drisse de coupe peut être liée en un ou plusieurs points de la paroi gonflée, notamment par thermosoudure. Cela présente plusieurs avantages. Cela permet d'éviter leur déplacement à la surface de la paroi gonflée pendant l'utilisation de cette dernière et donc d'éviter toute interférence avec la mission à laquelle la paroi gonflée participe. Un deuxième avantage est de faciliter la découpe lorsqu'une traction leur sera appliquée. Par ailleurs ces liens permettent, dans le cas notamment d'une drisse de coupe de longueur supérieure à la longueur de découpe, de déterminer de façon approximative la ligne selon laquelle cette drisse de coupe découpera la paroi gonflée.

Le(s) point(s) de fixation d'une drisse de coupe permet(tent) d'éviter qu'elles ne passent longitudinalement à travers un unique trou dans la paroi gonflée sensiblement du même diamètre que la drisse de coupe.

Un dispositif de traction selon l'invention peut prendre plusieurs formes. Notamment un dispositif de traction peut exercer une traction sur une drisse de coupe de par son poids. Un tel dispositif de traction peut aussi être actif et être équipé, par exemple, d'un moteur. De nombreuses autres manières de réaliser un tel dispositif sont envisageables dans le cadre de la présente invention.

Notamment, lorsqu'une drisse de coupe est attachée à une telle drisse de commande et qu'elle n'est attachée à la paroi gonflée que par un point de fixation. Le point d'attache entre drisse de commande et drisse de coupe est avantageusement différent du point de fixation de la drisse de coupe à la paroi gonflée afin que la longueur de découpe soit non nulle et que ladite drisse de coupe ne traverse pas longitudinalement la paroi gonflée une fois le point de fixation détruit.

Une drisse de commande selon l'invention doit être capable de résister à et de communiquer la traction exercée par un dispositif de traction aux drisses de coupe auxquelles elle est attachée. Notamment le(les) point(s) d'attache de chaque drisse de commande à chaque drisse de coupe doi(ven)t être tel(s) que la drisse de coupe ne puisse pas couper la drisse de commande. Par exemple, la drisse de commande peut être localement renforcée ou protégée par une partie métallique.

Selon un mode de réalisation de l'invention,
- la paroi gonflée est une enveloppe gonflée d'un ballon d'aérostat, ledit aérostat comprenant au moins une masse, dite charge utile, suspendue, en vol, à au moins un ballon de l'aérostat grâce à un dispositif de suspension,
- au moins une charge utile est reliée à au moins une drisse de commande, elle-même reliée à au moins une drisse de coupe,
- le dispositif de suspension de cette charge utile présente un dispositif d'inactivation du dispositif de suspension, adapté pour que la charge utile puisse être suspendue à la drisse de commande et puisse exercer une traction sur cette dernière sous l'effet de son poids.

Dans ce cas, le poids de la charge utile est utilisé comme force de traction sur une ou plusieurs drisses de coupe par l'intermédiaire d'une ou plusieurs drisses de commande.

Un dispositif de rupture peut être actionné en fonction d'un ou plusieurs critères prédéterminés de natures très variées comme cela a déjà été évoqué lors de la description du procédé de dégonflage.

De même, le dispositif de rupture peut être réalisé grâce à différents moyens techniques en fonction de la nature de la paroi gonflée, du dispositif de traction, et du dispositif de suspension.

En particulier dans le cas d'un aérostat, le dispositif de rupture inactive tout ou partie du dispositif de suspension d'au moins une charge utile. Un tel dispositif de rupture peut en particulier être réalisé grâce à des moyens pyrotechniques.

L'invention concerne aussi un procédé ou un dispositif caractérisé en combinaison par tout ou partie des caractéristiques mentionnées ci-dessus ou ci-après.

L'invention s'étend à tout aérostat dont au moins l'un des ballons présente au moins une enveloppe gonflée équipée d'un dispositif caractérisé en combinaison par tout ou partie des caractéristiques mentionnées ci-dessus ou ci-après.

D'autres caractéristiques, buts et avantages de l'invention ressortiront de la description détaillée qui suit, en référence aux dessins qui en représentent à titre d'exemple non limitatif deux modes de réalisation préférentiels. Sur ces dessins :
- la figure 1 est une représentation schématique en coupe longitudinale, c'est-à-dire par un plan contenant l'axe vertical, d'une paroi 1 gonflée atmosphérique/stratosphérique, ou aérostat, de type ballon-sonde équipé d'une charge 4 utile et d'un dispositif selon une première variante conforme à l'invention,
- la figure 2 est une représentation schématique en coupe longitudinale de la paroi 1 gonflée de la figure 1 représentée pendant la mise en oeuvre d'un procédé de découpe de la paroi 1 gonflée selon l'invention,
- la figure 3 est une représentation schématique externe de la paroi gonflée de la figure 1 représentée après la mise en oeuvre du procédé de découpe de la paroi 1 gonflée selon l'invention,
- la figure 4 est une représentation schématique d'une paroi 1 gonflée atmosphérique/stratosphérique, ou aérostat, de type ballon-sonde équipé d'une charge 4 utile et d'un dispositif selon une seconde variante conforme à l'invention.

Le procédé de dégonflage selon l'invention consiste principalement à découper une paroi 1 gonflée grâce à au moins un organe de coupe de façon à la dégonfler rapidement et de façon fiable.

Le procédé selon l'invention dans une première variante de réalisation est mis en oeuvre sur un ballon-sonde par un dispositif selon l'invention comportant :
- à titre d'organe de coupe, une corde, dite drisse 2 de coupe, fixée en sa première extrémité à un point, dit point 3 de fixation, à une paroi 1 gonflée de type aérostat comportant notamment une enveloppe 1 gonflée, ladite drisse 2 de coupe étant disposée sur la surface externe de l'enveloppe 1,
- une corde, dite drisse 5 de commande, attachée en son extrémité à la seconde extrémité de la drisse 2 de coupe,
- une charge 4 utile attachée à l'enveloppe 1 par l'intermédiaire de suspentes 6,
- un dispositif 7 de rupture des suspentes,
- un dispositif 8 de rupture de la drisse de commande.

Dans toute la suite, le terme « vol utile » désigne la période de vol de l'aérostat entre le moment du décollage et le moment de la rupture des suspentes 6.

Par ailleurs, avant l'inactivation par la rupture des suspentes 6 la drisse 2 de coupe traverse l'enveloppe 1 en un point désigné dans la suite par « point 9 de traverse ».

La découpe commence à partir de ce point 9 de traverse. Le point mobile auquel la drisse de coupe traverse la paroi gonflée au cours de la découpe est désigné dans la suite par « point 10 de découpe ». Avant l'enclenchement du procédé de découpe, et au moment t=0 de la découpe, le point 10 de découpe et le point 9 de traverse sont confondus.

Pendant le vol utile du ballon-sonde, les drisses respectivement 2 ; 5 de coupe et de commande sont disposées de telle manière à ne pas interférer avec le vol, et en particulier à ne pas endommager l'enveloppe 1. A cet effet, la drisse 2 de coupe est disposée sur l'enveloppe 1 en formant de petits zigzags (non représentés sur les figures) le long de l'enveloppe. La drisse 2 de coupe est en particulier thermosoudée en plusieurs points de la paroi gonflée afin de maintenir la drisse 2 de coupe en position pendant le vol utile de l'aérostat.

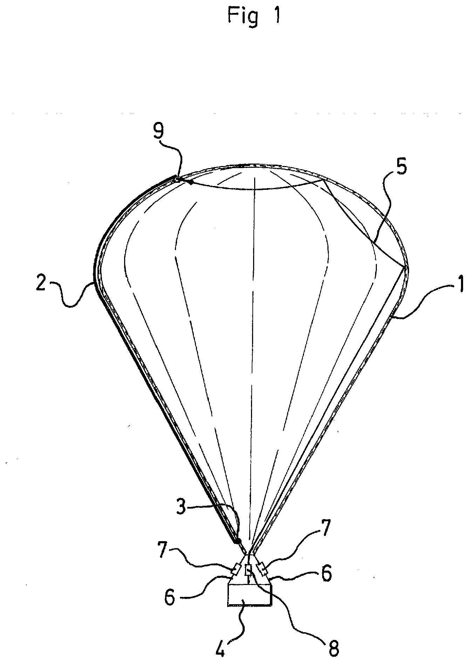

Egalement à cet effet, la drisse 5 de commande présente une longueur d'environ 75% supérieure à la longueur de commande et est disposée à l'intérieur de l'enveloppe selon la représentation de la figure 1 c'est-à-dire qu'elle est faiblement attachée en certains points intérieurs de l'enveloppe 1, afin de ne pas tirer inutilement sur la drisse 2 de coupe pendant le vol utile du ballon-sonde mais aussi afin de ne pas former de noeuds qui pourraient nuire à la mise en oeuvre du procédé de dégonflage.

La longueur de commande dans le cas présent est définie comme la distance en ligne droite depuis le point d'attache de la drisse 5 de commande à la charge 4 utile jusqu'à son point d'attache à la drisse 2 de coupe.

Le procédé de dégonflage selon l'invention comprend les étapes décrites ci-dessous.

Le dispositif 7 de rupture des suspentes comportant des charges pyrotechniques est activé en fonction d'un délai écoulé depuis le décollage de l'aérostat, mesuré par une minuterie qui déclenche son activation en fin de vol utile du ballon-sonde. Les suspentes sont inactivées par rupture.

La charge 4 utile n'est alors plus suspendue au ballon-sonde et elle chute de par son propre poids en entraînant avec elle la drisse 5 de commande.

La drisse 5 de commande se détache successivement de ses points d'attache faible à l'intérieur de l'enveloppe pendant que la charge 4 utile prend de la vitesse. Lorsque la drisse 5 de commande est tendue entre son point d'attache à la charge 4 utile et son point d'attache à la drisse 2 de coupe, elle commence à communiquer l'effort de traction dû au poids de la charge 4 utile à la drisse 2 de coupe.

Le surplus de longueur de la drisse 5 de commande est utile à ce que la charge 4 utile acquière de la vitesse avant l'étape de découpe proprement dite. De ce fait, la charge 4 utile a une inertie non nulle au début de la découpe, ce qui permet d'amorcer la découpe plus facilement. Notamment, dans le cas où le poids de la charge 4 utile est inférieur à la force nécessaire à la découpe de la paroi gonflée, l'inertie acquise par la charge 4 utile permet de découper la paroi gonflée sur une distance d'autant plus grande que l'inertie acquise par la charge 4 utile est élevée.

A partir de l'instant auquel la drisse 5 de commande est tendue, la drisse 2 de coupe commence à découper progressivement l'enveloppe 1, depuis le point 9 de traverse, vers le point 3 de fixation. Au moins une portion de la drisse 2 de coupe se déplace par rapport à la paroi gonflée et le front de coupe se déplace à la surface de la paroi gonflée le long d'une ligne de coupe.

En particulier, il est nécessaire que la force de traction présente un sens orienté vers le demi-espace ouvert complémentaire du demi-espace fermé défini par un plan A tangent à la surface gonflée au point 10 de découpe, et comprenant la partie de la drisse de coupe n'ayant pas encore découpé la paroi gonflée. C'est-à-dire que, au point 10 de découpe, la drisse de coupe forme un angle inférieur à 180°. Ainsi, si la drisse de coupe est prédisposée à l'extérieur (respectivement à l'intérieur) de la paroi gonflée, la force de traction devra être orientée vers l'intérieur (respectivement l'extérieur) de la paroi gonflée.

La direction et le sens de la force de traction appliquée sur la drisse 2 de coupe peuvent être optimisés pour une meilleure découpe selon la forme et la nature des parois gonflées et de la puissance du dispositif de traction.

Par exemple, il est avantageux d'exercer une force de traction dont la direction est sensiblement coplanaire à la direction générale de la drisse de coupe avant qu'elle ne découpe la paroi gonflée définissant ainsi un plan B. De plus, il est aussi avantageux que la force de traction ait un sens orienté dans le demi-espace ouvert défini par un plan orthogonal aux plans A et B et par le côté où se trouve la drisse 2 de coupe avant de découper la paroi gonflée. C'est-à-dire que, au point 10 de découpe de la paroi gonflée, la drisse de coupe forme un angle inférieur à 90°.

Avantageusement et selon l'invention, le point 3 de fixation est plus bas que le point 9 de traverse. Bien que non nécessaire, cette disposition permet une déchirure plus facile et donc plus efficace de l'enveloppe 1. En effet, la traction étant exercée par le poids d'une charge 4 utile, elle est, a priori, globalement orientée vers le bas. En plaçant le point de fixation de la drisse 2 de coupe plus bas que le point 9 de traverse, la traction exercée sur la drisse 2 de coupe répondra aux critères d'optimisation de la force de traction.

Pendant la découpe, ou après que la drisse 2 de coupe a découpé l'enveloppe 1 jusqu'au point 3 de fixation, le dispositif 8 de rupture de la drisse de commande est activé et la charge 4 utile est libérée de l'enveloppe 1. L'enveloppe 1 est alors découpée et partiellement ou totalement dégonflée. Notamment le dispositif 8 de rupture est activé après un délai prédéterminé à partir de la rupture des suspentes.

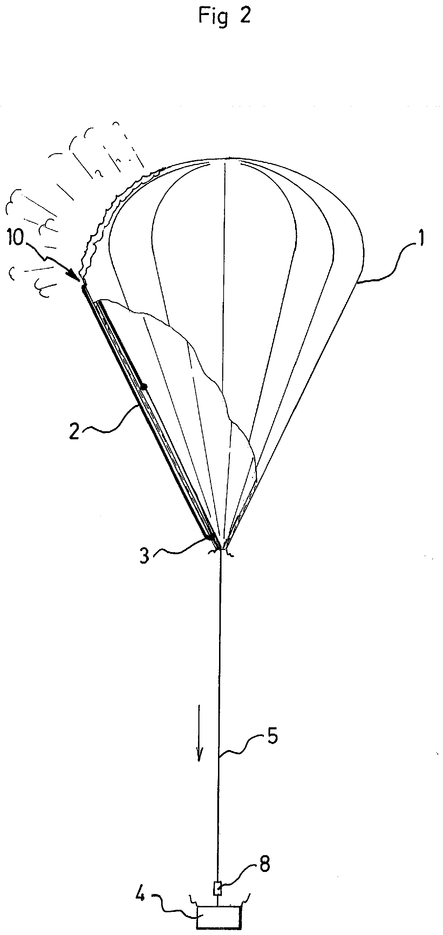

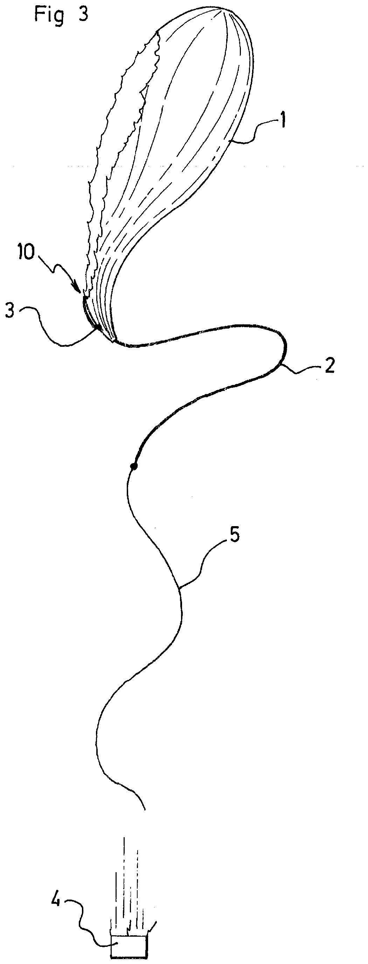

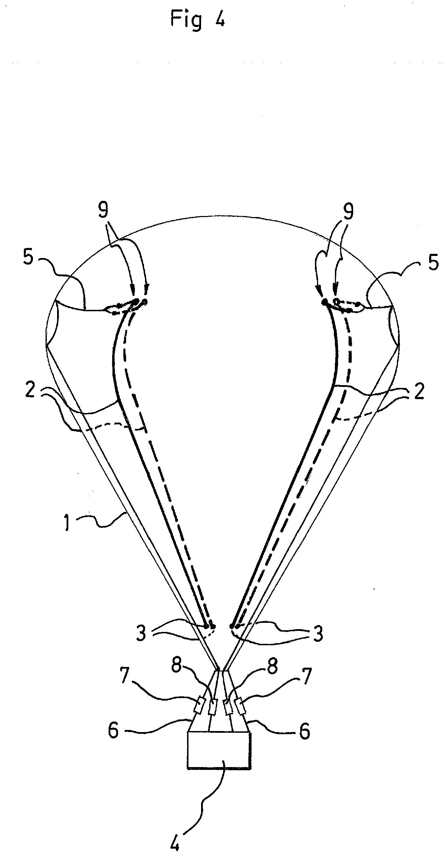

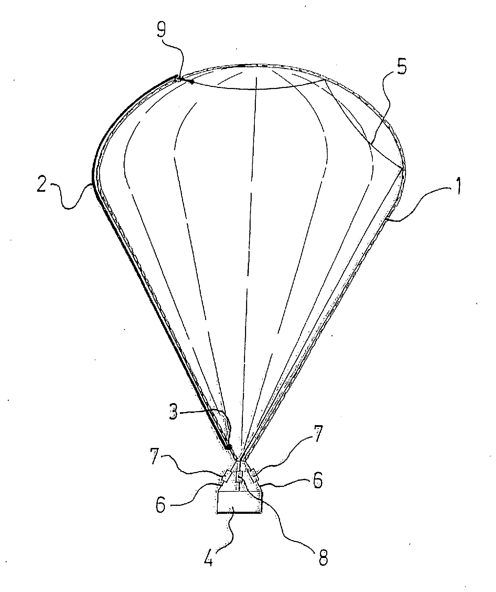

Un dispositif selon l'invention dans une seconde variante de réalisation est représenté schématiquement sur la figure 4. Il diffère du dispositif décrit précédemment et représenté sur les figures 1, 2 et 3 en ce qu'il comprend plusieurs drisses 2 de coupe et plusieurs drisses 5 de commande. En particulier, dans la variante présentée, le dispositif comprend deux drisses 5 de commande, et quatre drisses 2 de coupe. Chacune des drisses 5 de commande est attachée à l'un de deux groupes distincts de deux drisses 2 de coupe.

Chacune des drisses 5 de commande et des drisses 2 de coupe sont disposées respectivement dans et sur l'enveloppe de manière similaire à la variante précédemment décrite. Notamment, les drisses 2 de coupe sont fixées chacune en un point 3 de fixation à la paroi gonflée. Le dit point 3 de fixation peut être commun aux quatre drisses 2 de coupe, ou bien il peut en être différent. Par ailleurs, le(s) point(s) 3 de fixation est(sont) situé(s) plus bas sur l'enveloppe respectivement que le(s) point(s) de traverse.

L'invention peut faire l'objet de nombreuses autres variantes de réalisation non représentées. En particulier, il est possible d'utiliser un dispositif constitué d'un nombre différent de drisses 2 de coupe et de drisses 5 de commande aux deux variantes représentées d'une part sur les figures 1, 2 et 3 et d'autre part sur la figure 4.

De même, les drisses 2 de coupe ne sont pas nécessairement attachées par l'une de leur extrémité à l'enveloppe gonflée mais peuvent l'être par un ou plusieurs points 3 de fixation quelconques. Par exemple le point 3 de fixation peut se trouver au milieu de la drisse 2 de coupe, auquel cas on peut exercer la traction depuis les deux extrémités de la même drisse 2 de coupe.

La fonction du point de fixation peut être remplie par la thermosoudure de tout ou partie d'une drisse.

Les drisses 2 de coupe peuvent être initialement disposées sur l'extérieur et/ou sur l'intérieur de la paroi gonflée.

Avantageusement, dans le cas où plusieurs drisses 2 de coupe et plusieurs drisses 5 de commande sont utilisées, une drisse de commande est attachée en des points différents aux drisses de coupe auxquelles elle est reliée. La distance entre ces points d'attache permet de répartir dans le temps le début de la coupe par chacune des drisses de coupe. Cette répartition dans le temps permet d'éviter qu'un choc important ne soit répercuté dans la drisse de commande et ne risque de la rompre. En effet, lors du début de la découpe par une drisse de coupe, un effort de traction important est nécessaire pour amorcer la découpe. Si toutes les drisses de coupe reliées à une même drisse de commande commencent leur découpe en même temps, la traction exercée sur la drisse de commande doit être très importante au moment de l'amorçage de la découpe.

De plus, prévoir de commencer la découpe de la paroi 1 gonflée par toutes les drisses 2 de coupe en même temps expose au risque que le haut de l'enveloppe du ballon ne s'enfonce vers le bas, en amortissant l'effort de traction au début de la découpe. L'effort amorti pourrait donc être insuffisant pour amorcer ou poursuivre la coupe.

De la même manière, il est avantageux de prévoir des drisses de commandes de longueurs différentes entre elles afin qu'elles n'amorcent pas plusieurs découpes simultanément.

Par ailleurs, dans le cas de parois gonflées différentes d'un aérostat et ne disposant pas forcément d'une charge 4 utile, le dispositif de traction peut-être de nature différente. Par exemple le dispositif de traction peut comporter un moteur.

Afin que la paroi gonflée ne soit endommagée ni par une drisse 5 de commande ni par une drisse 2 de coupe, des moyens passifs ou actifs différents d'un simple surplus de longueur peuvent être mis en oeuvre.

En outre, d'autres organes de coupe, différents d'une corde peuvent être utilisés. Par exemple des organes de coupe comportant au moins une lame ou d'une pointe, des dispositifs de découpe par l'application d'une température élevée localement, etc.

Enfin de nombreux dispositifs de rupture peuvent être mis en oeuvre pour l'inactivation du dispositif de suspension. Ces dispositifs de rupture peuvent être pyrotechniques, électriques, électroniques, mécaniques, etc. Ils peuvent par ailleurs être déclenchés par de nombreux types de critères comme cela a déjà été exposé.

## Revendications

1. Procédé de dégonflage d'une paroi (1) gonflée d'un dispositif choisi parmi un ballon d'aérostat, un ballon sous-marin, une voile solaire, **caractérisé en ce qu'**on découpe ladite paroi (1) gonflée en déplaçant au moins un organe de coupe adapté pour couper la paroi (1) gonflée, sur la paroi (1) gonflée selon une ligne de coupe ayant pour effet de provoquer une ouverture de dégonflage de la paroi (1) gonflée.

2. Procédé de dégonflage selon la revendication 1 **caractérisé en ce qu'**on utilise au moins un organe de coupe filiforme, dit drisse (2) de coupe, et **en ce qu'**on exerce une traction adaptée pour que la drisse de coupe traverse l'épaisseur de la paroi (1) gonflée et découpe progressivement la paroi (1) gonflée en formant ladite ligne de coupe.

3. Procédé de dégonflage selon la revendication 2 **caractérisé en ce que** ladite drisse (2) de coupe :
- s'étend initialement sur une portion d'une face de la paroi (1) gonflée,
- est initialement fixée en au moins un point, dit point (3) de fixation, de la paroi (1) gonflée,
et **en ce que** ladite traction :
- est appliquée en au moins un point de la drisse (2) de coupe différent d'au moins un point (3) de fixation, et par l'intermédiaire d'au moins un organe filiforme, dit drisse (5) de commande,
- et est orientée, de façon à faire traverser l'épaisseur de la paroi (1) gonflée à la drisse (2) de coupe.

4. Procédé de dégonflage selon la revendication 3 **caractérisé en ce que** :
- la paroi (1) gonflée est une enveloppe gonflée d'un ballon d'aérostat, ledit aérostat comprenant au moins une masse, dite charge (4) utile, suspendue, en vol, à au moins un ballon de l'aérostat grâce à un dispositif (6) de suspension,
- pour découper ladite paroi (1) gonflée, on relie au moins une charge (4) utile à au moins une drisse (5) de commande reliée à au moins une drisse (2) de coupe, et on inactive le dispositif (6) de suspension de cette charge (4) utile de sorte qu'elle se trouve suspendue à la drisse (5) de commande et exerce sur cette dernière une traction sous l'effet de son poids.

5. Dispositif de dégonflage d'une paroi (1) gonflée d'un dispositif choisi parmi un ballon d'aérostat, un ballon sous-marin, une voile solaire, comprenant au moins un organe de coupe adapté pour couper ladite paroi gonflée selon une ligne de coupe ayant pour effet une ouverture de dégonflage de la paroi (1) gonflée, **caractérisé en ce qu'**au moins un organe de coupe est adapté pour couper ladite paroi gonflée par un déplacement de cet organe de coupe sur la paroi (1) gonflée.

6. Dispositif de dégonflage selon la revendication 5 **caractérisé en ce qu'**il comprend au moins un organe de coupe filiforme, dit drisse (2) de coupe, apte à être tiré par une traction adaptée pour que la drisse (2) de coupe traverse l'épaisseur de la paroi (1) gonflée et découpe progressivement la paroi (1) gonflée en formant ladite ligne de coupe.

7. Dispositif de dégonflage selon la revendication 6 **caractérisé en ce que** ladite drisse de coupe :
- s'étend initialement sur une portion d'une face de la paroi (1) gonflée,
- est initialement fixée en au moins un point, dit point (3) de fixation, de la paroi (1) gonflée,
- est apte à être tirée en au moins un point, différent d'au moins un point (3) de fixation,
- est attachée à au moins un organe filiforme, dite drisse (5) de commande, laquelle est :
∘ apte à communiquer une traction à ladite drisse (2) de coupe,
∘ disposée de telle manière à ce que la traction qu'elle communique à la drisse (2) de coupe soit orientée, de façon à lui faire traverser l'épaisseur de la paroi (1) gonflée.

8. Dispositif de dégonflage selon la revendication 7 **caractérisé en ce que** :
- la paroi (1) gonflée est une enveloppe gonflée d'un ballon d'aérostat, ledit aérostat comprenant au moins une masse, dite charge (4) utile, suspendue, en vol, à au moins un ballon de l'aérostat grâce à un dispositif (6) de suspension,
- au moins une charge utile (4) est reliée à au moins une drisse (5) de commande, elle-même reliée à au moins une drisse (2) de coupe,
- le dispositif (6) de suspension de cette charge utile (4) présente un dispositif (7) d'inactivation du dispositif de suspension adapté pour que la charge utile (4) puisse être suspendue à la drisse (5) de commande et puisse exercer une traction sur cette dernière sous l'effet de son poids.

9. Aérostat comprenant au moins un ballon présentant au moins une enveloppe (1) gonflée, **caractérisé en ce qu'**il comprend un dispositif selon l'une des revendications 6 à 10, de dégonflage de ladite enveloppe (1) gonflée.

## Patentansprüche

1. Verfahren zum Abblasen einer aufgeblasenen Wandung (1) einer Vorrichtung, ausgewählt aus einem Luftschiffballon, einem Unterseeballon, einem Sonnensegel, **dadurch gekennzeichnet, dass** die aufgeblasene Wandung (1) durch Verlagern mindestens eines Schneideorgans aufgeschnitten wird, das geeignet ist, die aufgeblasene Wandung (1) über die aufgeblasene Wandung (1) gemäß einer Schnittlinie zu schneiden, wodurch eine Abblasöffnung der aufgeblasenen Wandung (1) bewirkt wird.

2. Abblasverfahren nach Anspruch 1, **dadurch gekennzeichnet, dass** mindestens ein fadenförmiges Schneideorgan, bezeichnet als Schneidschnur (2), verwendet wird, und dadurch, dass ein Zug ausgeübt wird, der geeignet ist, dass die Schneidschnur die Dicke der aufgeblasenen Wandung (1) durchquert und schrittweise die aufgeblasene Wandung (1) durch Bilden der Schnittlinie aufschneidet.

3. Abblasverfahren nach Anspruch 2, **dadurch gekennzeichnet, dass** die Schneidschnur (2):
- sich zunächst über einen Abschnitt einer Seite der aufgeblasenen Wandung (1) erstreckt,
- zunächst an mindestens einem Punkt, bezeichnet als Befestigungspunkt (3), der aufgeblasenen Wandung (1) befestigt ist,
und dadurch, dass der Zug:
- auf mindestens einen Punkt der Schneidschnur (2), der sich von mindestens einem Befestigungspunkt (3) unterscheidet, und mit Hilfe von mindestens einem fadenförmigen Organ, bezeichnet als Steuerschnur (5), ausgeübt wird,
- und derart ausgerichtet wird, dass die Dicke der aufgeblasenen Wandung (1) mit der Schneidschnur (2) durchquert wird.

4. Abblasverfahren nach Anspruch 3, **dadurch gekennzeichnet, dass**:
- die aufgeblasene Wandung (1) eine aufgeblasene Hülle eines Luftschiffballons ist, wobei das Luftschiff mindestens eine im Flug an mindestens einem Ballon des Luftschiffs mit einer Aufhängevorrichtung (6) aufgehängte Masse, bezeichnet als Nutzlast (4), umfasst,
- um die aufgeblasene Wandung (1) aufzuschneiden, mindestens eine Nutzlast (4) mit mindestens einer Steuerschnur (5) verbunden wird, die mit mindestens einer Schneidschnur (2) verbunden ist, und die Aufhängevorrichtung (6) dieser Nutzlast (4) derart deaktiviert wird, dass sie sich an der Steuerschnur (5) aufgehängt befindet und auf diese unter der Wirkung ihres Gewichts einen Zug ausübt.

5. Vorrichtung zum Abblasen einer aufgeblasenen Wandung (1) einer Vorrichtung, ausgewählt aus einem Luftschiffballon, einem Unterseeballon, einem Sonnensegel, umfassend mindestens ein Schneideorgan, das geeignet ist, die aufgeblasene Wandung entlang einer Schnittlinie zu schneiden, was eine Abblasöffnung der aufgeblasenen Wandung (1) bewirkt, **dadurch gekennzeichnet, dass** mindestens ein Schneideorgan geeignet ist, die aufgeblasene Wandung durch eine Verlagerung dieses Schneidorgans über die aufgeblasene Wandung (1) aufzuschneiden.

6. Abblasvorrichtung nach Anspruch 5, **dadurch gekennzeichnet, dass** sie mindestens ein fadenförmiges Schneideorgan, bezeichnet als Schneidschnur (2), umfasst, die imstande ist, durch einen Zug gezogen zu werden, der geeignet ist, dass die Schneidschnur (2) die Dicke der aufgeblasenen Wandung (1) durchquert und schrittweise die aufgeblasene Wandung (1) durch Bilden der Schnittlinie aufschneidet.

7. Abblasvorrichtung nach Anspruch 6, **dadurch gekennzeichnet, dass** die Schneidschnur:
- sich zunächst über einen Abschnitt einer Seite der aufgeblasenen Wandung (1) erstreckt,
- zunächst an mindestens einem Punkt, bezeichnet als Befestigungspunkt (3), der aufgeblasenen Wandung (1) befestigt ist,
- imstande ist, an mindestens einem Punkt, der sich von mindestens einem Befestigungspunkt (3) unterscheidet, gezogen zu werden,
- an mindestens einem fadenförmigen Organ, bezeichnet als Steuerschnur (5), angebracht ist, die:
- imstande ist, einen Zug an die Schneidschnur (2) weiterzuleiten,
- derart angeordnet ist, dass der Zug, die sie an die Schneidschnur (2) weiterleitet, derart ausgerichtet ist, dass diese veranlasst wird, die Dicke der aufgeblasenen Wandung (1) zu durchqueren.

8. Abblasvorrichtung nach Anspruch 7, **dadurch gekennzeichnet, dass**:
- die aufgeblasene Wandung (1) eine aufgeblasene Hülle eines Luftschiffballons ist, wobei das Luftschiff mindestens eine im Flug an mindestens einem Ballon des Luftschiffs mit einer Aufhängevorrichtung (6) aufgehängte Masse, bezeichnet als Nutzlast (4), umfasst,
- mindestens eine Nutzlast (4) mit mindestens einer Steuerschnur (5) verbunden ist, die selbst mit mindestens einer Schneidschnur (2) verbunden ist,
- die Aufhängevorrichtung (6) dieser Nutzlast (4) eine Inaktivierungsvorrichtung (7) der Aufhängevorrichtung aufweist, die zum Aufhängen der Nutzlast (4) an der Steuerschnur (5) geeignet ist und einen Zug auf diese unter der Wirkung ihres Gewichts ausüben kann.

9. Luftschiff, umfassend mindestens einen Ballon, der mindestens eine aufgeblasene Hülle (1) umfasst, **dadurch gekennzeichnet, dass** es eine Abblasvorrichtung nach einem der Ansprüche 6 bis 10 der aufgeblasenen Hülle (1) umfasst.

## Claims

1. A method for deflating an inflated wall (1) of a device selected from an aerostat balloon, an underwater-balloon, a solar sail, **characterized in that** said inflated wall (1) is cut by displacing at least one cutting member adapted to cut the inflated wall (1), on the inflated wall (1) along a score line having the effect of generating an opening for deflating the inflated wall (1).

2. The deflation method according to claim 1, **characterized in that** at least one filiform cutting member is used, called cutting halyard (2), and **in that** a tension is exerted, adapted so that the cutting halyard passes throughout the thickness of the inflated wall (1) and gradually cuts the inflated wall (1) forming said score line.

3. The deflation method according to claim 2, **characterized in that** said cutting halyard (2):
- initially extends over a portion of a face of the inflated wall (1),
- is initially fastened in at least one point, called fastening point (3), of the inflated wall (1),
and **in that** said tension:
- is applied in at least one point of the cutting halyard (2) different from at least one fastening point (3), and via at least one filiform member, called control halyard (5),
- and is oriented, so as to make the cutting halyard (2) pass throughout the thickness of the inflated wall (1).

4. The deflation method according to claim 3, **characterized in that**:
- the inflated wall (1) is an inflated envelope of an aerostat balloon, said aerostat comprising at least one mass, called payload (4), hanging, in flight, from at least one balloon of the aerostat thanks to a hanging device (6),
- in order to cut said inflated wall (1), at least one payload (4) is connected to at least one control halyard (5) connected to at least one cutting halyard (2), and the hanging device (6) of this payload (4) is disabled so that it hangs from the control halyard (5) and exerts, on the latter, a tension under the effect of its weight.

5. A device for deflating an inflated wall (1) of a device selected from an aerostat balloon, an underwater-balloon, a solar sail, comprising at least one cutting member adapted to cut said inflated wall along a score line resulting in an opening for deflating the inflated wall (1), **characterized in that** at least one cutting member is adapted to cut said inflated wall by a displacement of this cutting member on the inflated wall (1).

6. The deflation device according to claim 5, **characterized in that** it comprises at least one filiform cutting member, called cutting halyard (2), capable of being pulled by a tension adapted so that the cutting halyard (2) passes throughout the thickness of the inflated wall (1) and gradually cuts the inflated wall (1) forming said score line.

7. The deflation device according to claim 6, **characterized in that** said cutting halyard:
- initially extends over a portion of a face of the inflated wall (1),
- is initially fastened in at least one point, called fastening point (3), of the inflated wall (1),
- is capable of being pulled in at least one point, different from at least one fastening point (3),
- is attached to at least one filiform member, called control halyard (5), which is:
∘ capable of communicating a tension to said cutting halyard (2),
∘ disposed such that the tension that it communicates to the cutting halyard (2) is oriented, so as to make it pass throughout the thickness of the inflated wall (1).

8. The deflation device according to claim 7, **characterized in that**:
- the inflated wall (1) is an inflated envelope of an aerostat balloon, said aerostat comprising at least one mass, called payload (4), hanging, in flight, from at least one balloon of the aerostat thanks to a hanging device (6),
- at least one payload (4) is connected to at least one control halyard (5), which in turn is connected to at least one cutting halyard (2),
- the hanging device (6) of this payload (4) has a device (7) for disabling the hanging device adapted so that the payload (4) could hang from the control halyard (5) and could exert a tension on the latter under the effect of its weight.

9. An aerostat comprising at least one balloon having at least one inflated envelope (1), **characterized in that** it comprises a device according to any of claims 6 to 10, for deflating said inflated envelope (1).
